Europäisches Patentamt

European Patent Office

Office européen des brevets

(11) Numéro de publication: **0 056 350**
**A1**

## (12) DEMANDE DE BREVET EUROPEEN

(21) Numéro de dépôt: **82400057.4**

(22) Date de dépôt: **13.01.82**

(51) Int. Cl.³: **G 01 P 3/54,** G 01 S 11/00

(30) Priorité: **13.01.81 FR 8100436**

(43) Date de publication de la demande: **21.07.82**
**Bulletin 82/29**

(84) Etats contractants désignés: **BE CH DE GB IT LI SE**

(71) Demandeur: **Coussineux, Henri Elie, 2 avenue Van Dyck, F-75008 Paris (FR)**

(72) Inventeur: **Coussineux, Henri Elie, 2 avenue Van Dyck, F-75008 Paris (FR)**

(74) Mandataire: **Arnaud, Jean Pierre Alfred, 94 rue Saint Lazare, F-75009 Paris (FR)**

(54) **Procédé et dispositif de mesure de la vitesse des véhicules.**

㉗ L'invention concerne les dispositifs de mesure de la vitesse des véhicules.

Elle se rapporte à un dispositif comprenant un capteur 11 de vibrations, par exemple un géophone, placé sur le sol à proximité d'une voie de circulation, un convertisseur analogique-numérique 13 et des mémoires 16, 17. Un comparateur 14 et une porte logique 15 déclenchent les mémoires 16, 17 lorsque le signal du capteur 11 passe à une valeur de référence en croissant et en décroissant respectivement. Un circuit 18 de calcul forme le rapport de la différence à la somme des valeurs conservées dans les deux mémoires 16 et 17. Un dispositif 19 d'affichage indique la vitesse du véhicule.

Application au contrôle de la vitesse des véhicules sur route.

EP 0 056 350 A1

ACTORUM AG

Procédé et dispositif de mesure de la vitesse des véhicules.

La présente invention concerne un procédé et un
dispositif de mesure de la vitesse d'un véhicule se déplaçant sur une chaussée ou d'un bateau se déplaçant
sur un plan d'eau.

On doit parfois mesurer la vitesse des véhicules
tels que les voitures automobiles roulant sur des routes
et des bateaux se déplaçant sur des plans d'eau, afin de
vérifier que leur vitesse ne dépasse pas une limite
permise.

Les dispositifs connus de mesure de la vitesse
des véhicules sont soit de type mécanique, mettant en
oeuvre des canalisations pneumatiques, soit de type
électromagnétique mettant en oeuvre des radars à effet
Doppler.

De tels dispositifs ont des coûts d'investissement et d'entretien élevés et ils n'ont pas les caractéristiques de fiabilité et de discrétion exigées dans
ce domaine. En fait, les dispositifs à radar peuvent
être détectés soit visuellement soit à l'aide d'un récepteur électromagnétique installé à bord des véhicules
dont on veut mesurer la vitesse. De même, les procédés
mettant en oeuvre des bandes ou des canalisations pneumatiques peuvent être détectés visuellement et exigent
aussi une infrastructure et un entretien non négligeables.

L'invention concerne un procédé et un dispositif
de mesure de la vitesse des véhicules, notamment des véhicules routiers. Elle concerne une telle mesure de la
vitesse des véhicules avec une fiabilité au moins égale
à celle des dispositifs connus, mais pour des coûts réduits d'entretien, d'investissement et de fonctionnement.

Plus précisément, l'invention concerne un dispositif de mesure de la vitesse d'un véhicule, comprenant :

- un capteur de vibrations destiné à former un
signal analogique,

- un convertisseur analogique-numérique destiné à recevoir le signal analogique et à former un signal
numérique représentatif de la fréquence des vibrations,

  - un dispositif de comparaison du signal analogique à un signal de référence, destiné à former un
premier signal de chargement lorsque le signal analogique
devient égal au signal de référence en croissant, et un
second signal de chargement lorsque le signal analogique
devient égal au signal de référence en décroissant,

  - une première mémoire destinée à recevoir le
signal numérique du convertisseur et à conserver la valeur de celui-ci lorsqu'elle reçoit le premier signal
de chargement,

  - une seconde mémoire destinée à recevoir le
signal numérique du convertisseur et à conserver la valeur
de celui-ci lorsqu'elle reçoit le second signal de chargement,

  - un dispositif de calcul destiné à recevoir les
données conservées par les deux mémoires et à former le
rapport de la différence à la somme de ces données, et

  - un dispositif d'affichage d'une information
représentative de ce rapport.

  Le capteur de vibrations est de préférence un
géophone ou un hydrophone, ayant une plage de sensibilité
comprise entre 3 et 100 Hz. Le capteur est de préférence
placé sur le sol, à proximité d'une voie de circulation.

  Le dispositif de mesure comprend en outre avantageusement un amplificateur muni d'un filtre passe-bande.

  Le dispositif de comparaison comprend avantageusement un comparateur et une porte logique.

  Dans une variante, le dispositif d'affichage est
une imprimante.

  Le dispositif comprend aussi avantageusement une
horloge.

  L'invention concerne aussi un procédé de mesure
de la vitesse d'un véhicule, comprenant :

  - la détection des vibrations créées par un véhicule et la formation d'un signal analogique correspondant,

  - la transformation du signal analogique en un signal numérique représentatif de la fréquence des vibrations,

- la comparaison du signal analogique à un signal
de référence, et la formation d'un premier ou d'un second
signal de chargement respectivement lorsque le signal
analogique devient égal au signal de référence en croissant ou en décroissant respectivement,

- la conservation de la valeur du signal numérique sous la commande du premier signal de chargement et
du second signal de chargement,

- le calcul du rapport de la différence des deux
valeurs conservées à leur somme, et

- l'affichage d'une information représentative
de ce rapport.

D'autres caractéristiques et avantages de l'invention ressortiront mieux de la description qui va suivre,
faite en référence aux dessins annexés sur lesquels :

la figure 1 est un diagramme très schématique
illustrant la mise en oeuvre d'un dispositif de mesure
selon l'invention ;

la figure 2 est un diagramme synoptique plus détaillé d'un dispositif de mesure de la vitesse d'un véhicule selon l'invention ; et

la figure 3 représente des courbes représentatives
de signaux créés dans le dispositif de la figure 2.

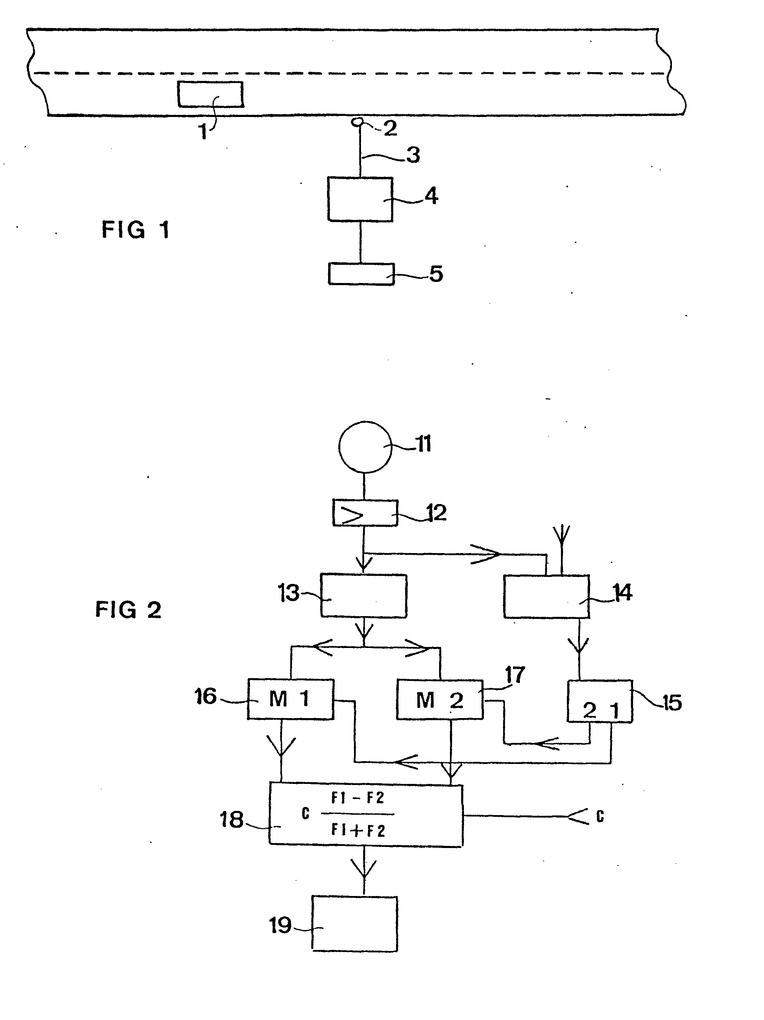

Sur les dessins, la figure 1 représente de façon
générale la mise en oeuvre d'un dispositif de mesure selon
l'invention. Ce dispositif est destiné à détecter les vibrations créées par un véhicule 1, par exemple une voiture
automobile se déplaçant sur une route. Un ensemble détecteur et amplificateur de vibrations 2 est posé sur le sol
près de la voie de circulation et le câble 3 transmet les
signaux électriques provenant de l'ensemble 2 et alimente
celui-ci. Un circuit logique câblé ou programmé 4 assure
le traitement des signaux provenant de l'ensemble 2. Un
dispositif 5 d'affichage indique la valeur mesurée de la
vitesse et donne une indication en temps réel à un opérateur. Ainsi, cette valeur peut être enregistrée, photographiquement ou à l'aide d'une imprimante par exemple.

La figure 2 est un diagramme synoptique plus détaillé d'un dispositif de mesure selon l'invention.

Les vibrations créées par un véhicule sont détectées par un capteur sismique 11, par exemple un géophone électrodynamique ayant une plage de sensibilité comprise entre 3 et 100 Hz. Dans un mode de réalisation, le géophone est du type ABEM SM1 de Holland, Etats-Unis d'Amérique, sensible essentiellement entre 4 et 12 Hz. Si le véhicule dont la vitesse doit être mesurée est un bateau se déplaçant sur l'eau, le capteur 11 est avantageusement un hydrophone.

Le signal analogique du capteur 11 parvient à un amplificateur 12. Celui-ci est par exemple du type AD 101 de Analog Device, donnant un gain de l'ordre de 2. Cet amplificateur est aussi de préférence couplé à un filtre passe-bande destiné à éliminer le bruit.

Le signal analogique de l'amplificateur 12 est transmis à un convertisseur analogique-numérique 13, du type AD 571 de Analog Device, donnant un signal qui a 10 $\pm$ 1 bits. Le signal analogique de l'amplificateur 12 est alors transmis à un comparateur 14 qui le compare à un signal de référence qui peut être réglé par l'opérateur, par exemple à l'aide d'un potentiomètre (non représenté). Le signal de sortie du comparateur 14 parvient à l'entrée d'une porte logique 15 qui a deux sorties 1 et 2. Lorsque le signal analogique provenant de l'amplificateur 12 est égal au signal de référence, le comparateur transmet un signal de commande à la porte logique 15. Ainsi, cette dernière transmet un premier signal de chargement à sa sortie 1 lorsqu'un signal analogique croissant devient égal au signal de référence, et elle transmet un second signal de chargement par sa sortie 2 lorsqu'un signal analogique décroissant devient égal au signal de référence, comme le détermine le comparateur 14.

Les signaux de chargement provenant de la première et de la seconde sortie de la porte logique 15, commandent une première et une seconde mémoire 16 et 17 dont les entrées sont reliées à la sortie du convertisseur 13. Ainsi, lorsqu'elle reçoit un signal de chargement, chaque mémoire conserve la valeur actuelle du signal numérique de sortie du convertisseur 13.

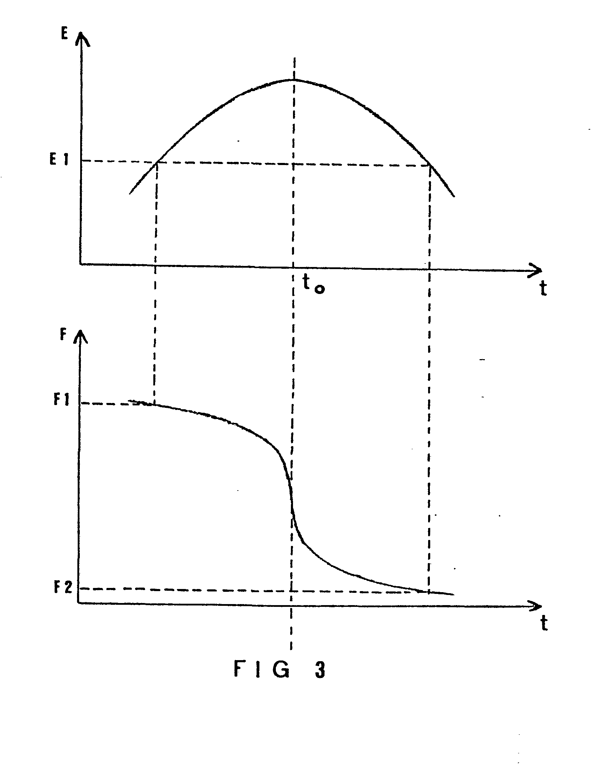

Cette opération est représentée sur la figure 3. La courbe supérieure représente le signal analogique E et le signal de référence E1. La courbe inférieure représente la fréquence F du signal analogique, en fonction du temps. Le signal numérique du convertisseur 13 est représentatif de cette fréquence. Ainsi, les fréquences F1 et F2 sont conservées respectivement dans la mémoire 16 et la mémoire 17 lorsque le signal analogique devient égale au signal de référence E1, en augmentant avant le temps $t_o$ et en diminuant après le temps $t_o$.

Dans un mode de réalisation, le comparateur 15 est du type AD 201/A de Analog Divice. La porte logique 15 est une porte numérique SN 7400 de Texas Instruments. Les mémoires 16 et 17 peuvent être chacune du type 1024 de Mostek, ayant une capacité de 8 bits.

Un circuit 18 de calcul reçoit les signaux de sortie des mémoires 16 et 17 et une valeur constante réglable C, et il calcule la valeur du rapport $C \frac{F1-F2}{F1+F2}$. La constante C dépend de la vitesse de propagation des ondes sismiques dans la voie de circulation dans laquelle se déplace le véhicule considéré. Le circuit 18 de calcul peut être du type SN 74 191 de Texas Instruments.

Un dispositif 19 d'affichage reçoit du circuit 18 de calcul une information représentative de la vitesse du véhicule. Ce dispositif 19 d'affichage peut être du type 7400, série 5082 de Hewlett-Packard, ayant sept bâtonnets.

En outre, l'appareil comprend une horloge synchronisant les différents circuits. Cette horloge peut être par exemple une horloge SN 1400 de Texas Instruments, fonctionnant à 10 MHz.

REVENDICATIONS

1.        Dispositif de mesure de la vitesse d'un véhicule, caractérisé en ce qu'il comprend :

- un capteur (11) de vibrations créées par un véhicule, destiné à former un signal analogique représentatif de ces vibrations,

- un convertisseur analogique-numérique (13) destiné à recevoir le signal analogique et à former un signal numérique représentatif de la fréquence des vibrations,

- un dispositif de comparaison (14, 15) destiné à recevoir le signal analogique et un signal de référence, et à former un premier signal de chargement lorsque le signal analogique devient égal au signal de référence en croissant, et un second signal de chargement lorsque le signal analogique devient égal au signal de référence en décroissant,

- une première mémoire (16) destinée à recevoir le signal numérique du convertisseur (13) et à conserver la valeur de ce signal lorsque la première mémoire reçoit le premier signal de chargement,

- une seconde mémoire (17) destinée à recevoir le signal numérique du convertisseur (13) et à conserver la valeur de ce signal lorsque la seconde mémoire reçoit le second signal de chargement,

- un dispositif de calcul (18) destiné à recevoir les données conservées par les deux mémoires et à former le rapport de leur différence et de leur somme, et

- un dispositif (19) d'affichage d'une information représentative de ce rapport.

2.        Dispositif selon la revendication 1, caractérisé en ce que le capteur de vibrations (11) est un géophone ayant une plage de sensibilité comprise entre 3 et 100 Hz.

3.        Appareil selon l'une des revendications 1 et 2, caractérisé en ce que le capteur (11) est destiné à être placé sur le sol à proximité d'une voie de circulation.

4.        Dispositif selon la revendication 1, caractérisé en ce qu'il comprend en outre un dispositif amplificateur et de filtrage (12) destiné à recevoir le signal analogique du capteur.

5.          Dispositif selon la revendication 1, caractérisé en ce que le dispositif de comparaison comprend un comparateur (14) et une porte logique numérique (15).

6. ·        Dispositif selon la revendication 1, caractérisé en ce que le dispositif d'affichage (19) comporte en outre une imprimante.

7.          Dispositif selon la revendication 1, caractérisé en ce qu'il comprend en outre une horloge.

8.          Procédé de mesure de la vitesse d'un véhicule, caractérisé en ce qu'il comprend :

          - la détection de vibrations créées par le véhicule et la formation d'un signal analogique représentatif de ces vibrations,

          - la transformation du signal analogique en un signal numérique représentatif de la fréquence des vibrations,

          - la comparaison du signal analogique à un signal de référence et la formation d'un premier signal de chargement lorsque le signal analogique devient égal au signal de référence en croissant et un second signal de chargement lorsque le signal analogique devient égal au signal de référence en décroissant,

          - la conservation des valeurs du signal numérique sous la commande du premier signal de chargement et du second signal de chargement,

          - le calcul du rapport de la différence à la somme des deux valeurs conservées, et

          - l'affichage d'une information représentative de ce rapport.

0056350

1/2

FIG 1

FIG 2

FIG 3

**Office européen des brevets**

## RAPPORT DE RECHERCHE EUROPEENNE

| Catégorie | Citation du document avec indication, en cas de besoin, des parties pertinentes | Revendication concernée |
|---|---|---|
| A | US - A - 3 351 943 (BUSH et al.)<br><br>* colonne 2, lignes 55-66; colonne 3, lignes 60-75; figures 3,4 *<br><br>--- | 1,4,5, 7,8 |
| A | FR - A - 1 495 625 (COMPAGNIE GE-NERALE D'ELECTRICITE)<br><br>* en entier; figures *<br><br>--- | 1,4,8 |
| A | DE - A - 1 916 706 (SIEMENS)<br><br>* page 4, ligne 1 - page 5, ligne 5; figure 1 *<br><br>--- | 1,8 |
| A | US - A - 3 958 243 (LINDER)<br><br>* colonne 2, lignes 35-49; colonne 3, lignes 25-27; colonne 3, ligne 67 - colonne 4, ligne 10; figures 1,3a,3b *<br><br>--- | 1,7,8 |
| A | DE - A - 2 143 868 (LICENTIA)<br><br>* page 5, ligne 28 - page 6, ligne 17; figure 2 * | |

**CLASSEMENT DE LA DEMANDE (Int. Cl. 3)**

G 01 P   3/54
G 01 S  11/00

**DOMAINES TECHNIQUES RECHERCHES (Int. Cl. 3)**

G 01 P
G 01 S

**CATEGORIE DES DOCUMENTS CITES**

X: particulièrement pertinent à lui seul
Y: particulièrement pertinent en combinaison avec un autre document de la même catégorie
A: arrière-plan technologique
O: divulgation non-écrite
P: document intercalaire
T: théorie ou principe à la base de l'invention
E: document de brevet antérieur, mais publié à la date de dépôt ou après cette date
D: cité dans la demande
L: cité pour d'autres raisons

&: membre de la même famille, document correspondant

Le présent rapport de recherche a été établi pour toutes les revendications

| Lieu de la recherche | Date d'achèvemment de la recherche | Examinateur |
|---|---|---|
| La Haye | 24-03-1982 | HANSEN |

OEB Form 1503.1   06.78